(19) Europäisches Patentamt
European Patent Office
Office européen des brevets

(11) **EP 1 432 174 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(51) Int Cl.:
*H04L 12/24* (2006.01)     *H04L 12/26* (2006.01)
*H04L 29/06* (2006.01)

(21) Anmeldenummer: **03104089.2**

(22) Anmeldetag: **05.11.2003**

(54) **Verfahren für eine Qualitäts-Analyse bei der Übertragung von echtzeit-kritischen Daten in einem paket-orientierten Netzwerk**

Method for quality analysis when transmitting realtime data in a packet switched network

Méthode pour l'analyse de la qualité lors de la transmission de données en temps réel dans un réseau de commutation par paquets

(84) Benannte Vertragsstaaten:
**DE FR GB IT**

(30) Priorität: **20.12.2002 DE 10260301**

(43) Veröffentlichungstag der Anmeldung:
**23.06.2004 Patentblatt 2004/26**

(73) Patentinhaber: **Siemens Enterprise Communications GmbH & Co. KG**
**81379 München (DE)**

(72) Erfinder:
• **Bloch, Anat**
**80538, München (DE)**
• **Lindner, Thomas**
**81379, München (DE)**
• **Riedel, Manfred**
**81246, München (DE)**

(74) Vertreter: **Fritzsche, Thomas et al**
**Fritzsche Patent**
**Naupliastrasse 110**
**81545 München (DE)**

(56) Entgegenhaltungen:
WO-A-00/31996     WO-A-97/27686
WO-A1-99/10995

• **YUMING JIANG ET AL: "Providing Quality of Service Monitoring: Challenges and Approaches" IEEE, 10. April 2000 (2000-04-10), Seiten 115-128, XP010376678**

EP 1 432 174 B1

**Beschreibung**

Die vorliegende Erfindung betrifft ein Verfahren für eine Analyse der Übertragungsqualität - in der Literatur häufig mit Quality of Service, kurz QoS, bezeichnet - in einem paket-orientierten - insbesondere auf dem IP-Protokoll (Internet Protocol) basierenden - Netzwerk gemäß dem Oberbegriff des Patentanspruchs 1.

Aufgrund einer zunehmenden globalen Ausrichtung von Unternehmen nimmt die Nutzung von Telekommunikationsdiensten zur Übermittlung von Sprache und Daten ständig zu. Dies hat zur Folge, dass die durch diese Telekommunikationsdienste verursachten Kosten ständig steigen und zu einem erheblichen Kostenfaktor für die Unternehmen werden, die Möglichkeiten zur Reduzierung dieser Kosten suchen. Eine Möglichkeit Daten kostengünstig und weltweit übermitteln zu können, bieten lokale und globale Computernetzwerke, wie beispielsweise ein 'Intranet' oder das 'Internet'. Hierbei werden auch vermehrt echtzeit-kritische Daten, beispielsweise Sprach- und Videodaten, über derartige lokale und globale paket-orientierte Netzwerke übermittelt.

Bei einer Übermittlung von echtzeit-kritischen Daten über paket-orientierte Netzwerke liegen in der Regel bedingt durch eine Kombination verschiedenster Einflussfaktoren, wie z.B. das verwendete Netzwerk, das verwendete Übertragungsprotokoll etc., keine konstanten Übertragungsbedingungen - in der Literatur häufig auch als isochrone Übertragungsbedingungen bezeichnet - vor. Aus den wechselnden, d.h. nicht isochronen, Übertragungsbedingungen resultiert eine Beeinträchtigung der Qualität der übermittelten echtzeitkritischen Daten. Eine Möglichkeit zur Kompensierung von nicht isochronen Übertra gungsbedingungen ist das Vorsehen von sogenannten Empfangsspeichern - in der Literatur auch als Receiver-Buffer bezeichnet - durch welche eine Zwischenspeicherung der empfangenen Daten und anschließend ein isochrones Auslesen der Daten ermöglicht wird. Die Einstellung eines Empfangsspeichers ist dabei immer ein Kompromiss zwischen einer möglichst hohen Kompensation einer nicht isochronen Übertragung der echtzeitkritischen Daten - und somit einem großen Empfangsspeicher - und einer möglichst geringen Verzögerung der übertragenen Daten - und damit einem kleinen Empfangsspeicher.

Ein bekanntes Verfahren für die Bestimmung der Übertragungsqualität in einem paket-orientierten Netzwerk ist der sogenannte "Ping" gemäß dem ICMP-Protokoll (Internet Control Message Protocol), bei dem ein Testpaket ausgesendet wird und mittels eines empfangenen Antwortpakets die Übertragungsverzögerung - in der Literatur häufig als "Delay" bezeichnet - im Netzwerk ermittelt wird. Ein Nachteil des Ping-Verfahrens ist, dass für die Ermittlung der Übertragungsqualität herkömmliche Datenpakete und keine Datenpakete für die Übermittlung von echtzeitkritischen Daten - in der Literatur häufig als VoIP-Pakete (Voice over Internet Protokoll) bezeichnet - verwendet werden. Aufgrund unterschiedlicher Übertragungsmechanismen und damit auch eines unterschiedlichen Netzwerkverhaltens für echtzeit-kritische und nicht-echtzeitkritische Datenpakete im Netzwerk können mit dem bekannten Verfahren die besonderen Bedingungen einer isochronen Übertragung nicht ausreichend berücksichtigt werden.

Des weiteren wurde bereits in der deutschen Patentanmeldung mit dem amtlichen Anmeldekennzeichen 102 10 651.7 vorgeschlagen, Empfangszeitpunkte von in einer Richtung übertragenen RTP-Datenpaketen (Real Time Protocol) zu ermitteln und sogenannte Zwischenpaketzeiten durch eine kontinuierliche Subtraktion der Empfangszeitpunkte jeweils zweier aufeinanderfolgender Datenpakete zu berechnen. Anhand der Folge von Zwischenpaketzeiten kann auf einfache Weise erkannt werden, ob die Datenpakete isochron, oder nicht isochron transportiert werden.

Eine weitere Messgröße für die Übertragungsqualität in paket-orientierten Netzwerken ist die Anzahl der bei einer Datenübertragung verlorengegangenen Datenpakete im Verhältnis zur Anzahl der übermittelten bzw. am Empfänger erwarteten Datenpakete. Ein derartiger Wert wird beim RTCP-Standard (Real Time Control Protocol) durch das sogenannte "fraction lost field" standardmäßig zur Verfügung gestellt.

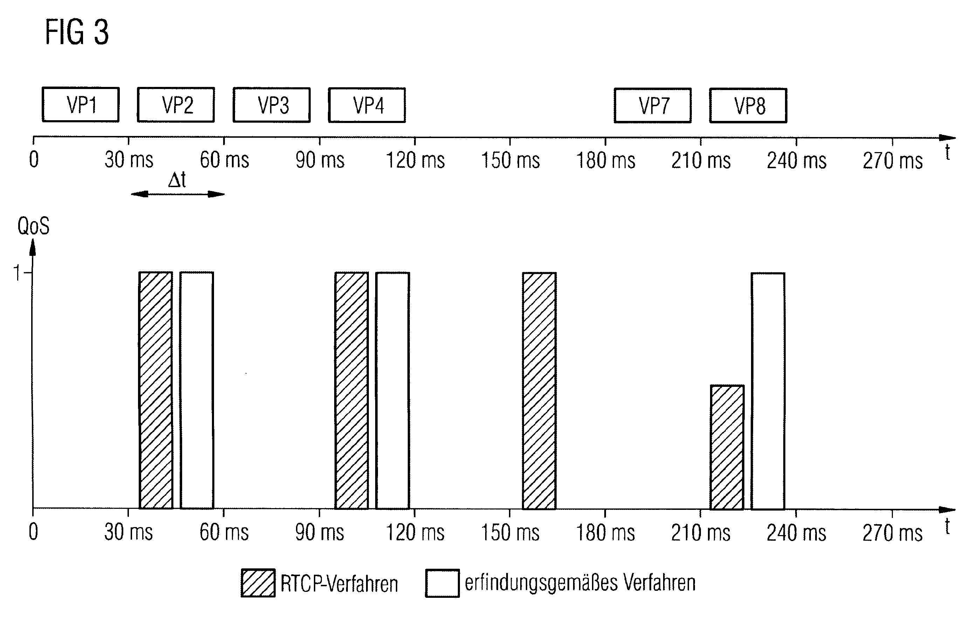

Nachteilig bei dem im Rahmen des RTCP-Standards verwendeten Verfahrens ist jedoch, dass bei der Ermittlung der verlorengegangenen Datenpakete die zeitliche Komponente der Datenübertragung nicht berücksichtigt wird. So wird bei dem Verfahren gemäß dem RTCP-Standard nur anhand des zuletzt empfangenen Datenpakets überprüft, ob alle vorhergehenden Datenpakete empfangen wurden. Nicht überprüft wird, ob zu einem bestimmten Zeitpunkt auch das diesem Zeitpunkt entsprechende Datenpaket empfangen wurde. Wird eine Verbindung zu einem Zeitpunkt vollständig unterbrochen, so wird diese Tatsache durch die im "fraction lost field" enthaltene Information nicht vollständig reflektiert (siehe Fig. 3 des Ausführungsbeispiels).

Insbesondere ergibt sich ein Problem bei Sendeeinheiten, die eine sogenannte "Voice Activity Detection" verwenden. Bei diesem Verfahren erkennt eine Sendeeinheit, dass aktuell keine zu sendenden Sprachdaten vorliegen und sendet ein sogenanntes SID-Paket (Silence Insertion Descriptor). In der Regel werden erst bei einem erneuten Vorliegen von Sprachdaten erneut Sprachdaten enthaltende Datenpakete gesendet.

Die Verwendung von derartigen SID-Paketen im Rahmen von leitungsvermittelten GSM-Mobilfunksystemen (GSM: Global System for Mobile Communications) ist aus den Patentanmeldungsveröffentlichungen WO 97/27686 A1 sowie WO 00/31996 A2 bekannt, wobei in derartigen Systemen in Sprachpausen auch ein periodisch wiederholtes Übertragen von SID-Paketen vorgesehen sein kann.

Der vorliegenden Erfindung liegt die Aufgabe zugrunde, ein Verfahren anzugeben, bei dem für eine Analyse der Übertragungsqualität in einem paket-orientierten Netzwerk die zeitliche Komponente der Datenübertragung mit berücksichtigt wird.

Gelöst wird die Aufgabe ausgehend von den Merkmalen des Oberbegriffs des Patentanspruchs 1 durch dessen kennzeichnende Merkmale.

Die Erfindung basiert auf einem System, bei dem an einem paket-orientierten Netzwerk zumindest ein erstes und ein zweites Endgerät angeschlossen sind, wobei vom ersten zum zweiten Endgerät echtzeit-kritische Daten über Nutzdaten-Frames übertragen werden. In Fällen, in denen aktuell keine echtzeit-kritischen Daten zur Übertragung vorliegen, werden diese Tatsache signalisierende SID-Frames - im weiteren als Füll-Frames bezeichnet - mit einer Mindestübertragungsrate vom ersten zum zweiten Endgerät übertragen. Für die Ermittlung der Übertragungsqualität werden daraufhin die innerhalb einer Zeitspanne am zweiten Endgerät empfangenen Nutzdaten-Frames und Füll-Frames berücksichtigt.

Durch das Versenden von Füll-Frames mit einer Mindestübertragungsrate kann das erfindungsgemäße Verfahren auch bei Sendeeinheiten eingesetzt werden, die eine "Voice Activity Detection" unterstützten.

Ein wesentlicher Vorteil des erfindungsgemäßen Verfahrens besteht darin, dass das erfindungsgemäße Verfahren mit nur geringem Aufwand in bereits bestehende Systeme implementiert werden kann.

Ein weiterer Vorteil des erfindungsgemäßen Verfahrens besteht darin, dass die Bestimmung der Übertragungsqualität ausschließlich anhand von Informationen erfolgt, die an der die Daten-Frames empfangenen Einheit vorliegen. Auf diese Weise ist die Ermittlung der Übertragungsqualität mit einem nur geringen Aufwand verbunden.

Vorteilhaft ist des weiteren, dass mittels des erfindungsgemäßen Verfahrens die Übertragungsqualität zu beliebigen Berichtzeitpunkten, bzw. zu einer beliebigen Zeitspanne zwischen 2 frei wählbaren Berichtzeitpunkten, ermittelt werden kann, wohingegen mit dem Verfahren nach dem RTCP-Standard nur der Gesamtzeitraum seit dem Beginn der Datenübertragung betrachtet werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, dass durch die Einstellbarkeit der Mindestübertragungsrate das erfindungsgemäße Verfahren auf einfache Weise an unterschiedliche Sende/Empfangseinheiten angepasst und die Genauigkeit des Verfahrens verbessert bzw. kontrolliert werden kann.

Ein Ausführungsbeispiel der Erfindung wird im folgenden anhand der Zeichnung näher erläutert.

Dabei zeigen:

Fig. 1:     ein Strukturbild zur schematischen Darstellung der wesentlichen am erfindungsgemäßen Verfahren beteiligten Funktionseinheiten;

Fig. 2a:   ein Strukturbild zur schematischen Darstellung ei- ner Datenübermittlung ausgehend von einer Sendeeinheit mit "Voice Activity Detection" gemäß dem Stand der Technik;

Fig. 2b:   ein Strukturbild zur schematischen Darstellung ei- ner erfindungsgemäßen Datenübermittlung ausgehend von einer Sendeeinheit mit "Voice Activity Detecti- on" ; und

Fig. 3:     ein Strukturbild zum Vergleich einer Ermittlung der Übertragungsqualität gemäß dem Stand der Technik und gemäß dem erfindungsgemäßen Verfahren.

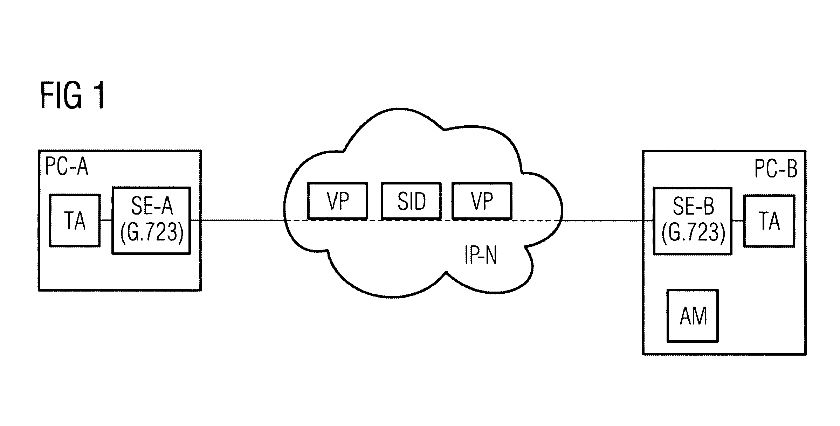

Fig. 1 zeigt ein Strukturbild eines Kommunikationssystems mit einem ersten Endgerät PC-A und einem zweiten Endgerät PC-B, die über ein IP-orientiertes (Internet Protocol) Netzwerk IP-N miteinander verbunden sind. Eine Datenübermittlung über das IP-orientierte Netzwerk IP-N erfolgt mittels Datenpakete. Im vorliegenden Ausführungsbeispiel sind das erste und das zweite Endgerät PC-A, PC-B jeweils durch einen Personal Computer mit einer auf dem Personal Computer ablaufenden Telefonapplikation TA realisiert. Alternativ können die Endgeräte PC-A, PC-B auch durch sogenannte IP-Phones oder herkömmliche Telefone, die über einen entsprechend ausgestalteten Adapter an das IP-orientierte Netzwerk IP-N angeschossen sind, realisiert sein.

Ein Anschluss des ersten Endgerätes PC-A und des zweiten Endgerätes PC-B an das IP-orientierte Netzwerk IP-N erfolgt jeweils über eine in den Endgeräten PC-A, PC-B implementierte Sende/Empfangseinheit SE-A, SE-B. Im vorliegenden Ausführungsbeispiel erfolgt eine Datenübertragung über das IP-orientierte Netzwerk IP-N durch die Sende/Empfangseinheiten SE-A, SE-B gemäß dem Übertragungsstandard G.723 der ITU (International Telecommunication Union) - durch das in Klammern gesetzte G.723 veranschaulicht. Alternativ könnte auch der Übertragungsstandard G.711 der ITU verwendet werden. Von der Telefonapplikation TA an die Sende/Empfangseinheit SE-A, SE-B übermittelte Sprachdaten werden in Nutzdaten-Frames VP - in der Literatur häufig als "voice frames" bezeichnet - gepackt, die wiederum in - nicht dargestellte - Datenpakete eingefügt über das IP-orientierte Netzwerk IP-N übermittelt werden.

Die Sende/Empfangseinheiten SE-A, SE-B der Endgeräte PC-A, PC-B unterstützen jeweils die sogenannte "Voice Activity Detection". Bei der "Voice Activity Detection" erkennt die Sende/Empfangseinheit SE-A, SE-B dass aktuell keine zu sendenden Sprachdaten vorliegen und sendet einen sogenannten SID-Frame (Silence Insertion Descriptor) - im weiteren als Füll-Frame SID bezeichnet. In der Regel werden erst bei einem erneuten Vorliegen von Sprachdaten erneut Sprachdaten enthaltende Nutzdaten-Frames VP gesendet.

Im zweiten Endgerät PC-B ist für eine Ermittlung der Übertragungsqualität ein Auswertemodul AM implementiert, das mit der Sende/Empfangseinheit SE-B verbunden ist. Das Auswertemodul AM ermittelt die an der Sende/Empfangseinheit SE-B empfangenen Nutzdaten-Frames VP und Füll-Frames SID und berechnet daraus die Übertragungsqualität für das IP-orientierte Netzwerk IP-N. In Fällen, in denen die Endgeräte PC-A, PC-B durch IP-Phones oder herkömmliche Telefone realisiert sind, kann das Auswertemodul AM in einer - nicht dargestellten - separaten Einrichtung implementiert werden, die entweder direkt oder über das IP-orientierte Netzwerk IP-N an die IP-Phones oder die herkömmlichen Telefone angeschlossen ist.

Im folgenden wird die Erfindung anhand einer unidirektionalen Datenübermittlung vom ersten Endgerät PC-A zum zweiten Endgerät PC-B näher erläutert.

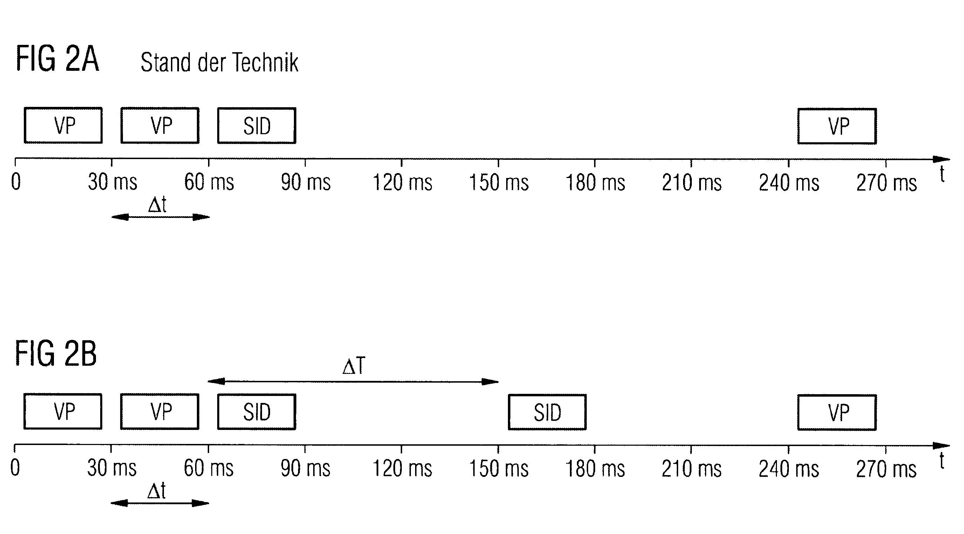

Fig. 2a zeigt ein Strukturbild zur schematischen Darstellung einer Datenübermittlung ausgehend von der Sendeeinheit SE-A mit "Voice Activity Detection" gemäß dem Stand der Technik. Die "Voice Activity Detection" ist derart definiert, dass eine Sendeeinheit zusätzlich zu einem ersten Füll-Frame SID einen weiteren Füll-Frame SID aussendet, wenn sich die Umgebungsgeräusche über einen einstellbaren Grenzwert hinaus verändern. Bei dem Ausführungsbeispiel gemäß Fig. 2a und 2b wird davon ausgegangen, dass sich die Umgebungsgeräusche nicht über diesen Grenzwert hinaus verändern, so dass beim herkömmlichen Verfahren kein weiterer Füll-Frame SID besendet wird.

Des weiteren wird davon ausgegangen, dass eine Datenübertragung über das IP-orientierte Netzwerk IP-N gemäß dem Übertragungsstandard G.723 der ITU erfolgt. Beim Übertragungsstandard G.723 beträgt eine Nutzdaten-Frame-Dauer $\Delta t$ = 30 ms. Beim Übertragungsstandard G.711 der ITU würde die Nutzdaten-Frame-Dauer $\Delta t$ = 10 ms betragen. In der Figur ist eine Gesamt-Übertragungsdauer von 270 ms dargestellt.

Beim vorliegenden Ausführungsbeispiel liegen zu den Zeitpunkten t = 0 ms, t = 30 ms und t = 240 ms zu übertragende Sprachdaten vor, die von der Sende/Empfangseinheit SE-A über das IP-orientierte Netzwerk IP-N übermittelt werden. Somit sendet die Sende/Empfangseinheit SE-A zum Zeitpunkt t = 0 ms und t = 30 ms jeweils ein Nutzdaten-Frame VP. Da zum Zeitpunkt t = 60 ms keine Sprachdaten vorliegen, sendet die Sende/Empfangseinheit SE-A ein Füll-Frame SID. Die Füll-Frame-Dauer beträt analog zu den Nutzdaten-Frames VP ebenfalls 30 ms. Da erst zum Zeitpunkt t = 240 ms neue zu übertragende Sprachdaten vorliegen, wird bis zum Zeitpunkt t = 240 ms kein weiterer Daten-Frame über das IP-orientierte Netzwerk IP-N übermittelt.

Fig. 2b zeigt ein Strukturbild zur schematischen Darstellung der Datenübermittlung ausgehend von der Sendeeinheit SE-A mit "Voice Activity Detection" gemäß dem erfindungsgemäßen Verfahren. Die Datenübertragung über das IP-orientierte Netzwerk IP-N erfolgt dabei wiederum gemäß dem Übertragungsstandard G.723 der ITU. Die Mindestübertragungsrate für die Füll-Frames SID ist dabei derart eingestellt, dass die Zeit $\Delta T$ zwischen der Übertragung zweier Füll-Frames SID maximal um den Faktor X = 3 größer ist als die Nutzdaten-Frame-Dauer $\Delta t$. Die Zeit $\Delta T$ zwischen der Übertragung zweier Füll-Frames SID beträgt somit maximal $\Delta T$ = 90 ms.

Beim vorliegenden Ausführungsbeispiel liegen zu den Zeitpunkten t = 0 ms, t = 30 ms und t = 240 ms zu übertragende Sprachdaten vor, die von der Sende/Empfangseinheit SE-A über das IP-orientierte Netzwerk IP-N übermittelt werden. Somit sendet die Sende/Empfangseinheit SE-A zum Zeitpunkt t = 0 ms und t = 30 ms jeweils ein Nutzdaten-Frames VP. Da zum Zeitpunkt t = 60 ms keine Sprachdaten vorliegen, sendet die Sen de/Empfangseinheit SE-A ein Füll-Frame SID. Die Füll-Frame-Dauer beträt wiederum 30 ms. Nach Ablauf von $\Delta T$ = 90 ms nach der Übermittlung des ersten Füll-Frames SID, also zum Zeitpunkt t = 150 ms sendet die Sende/Empfangseinheit SE-A erneut ein Füll-Frame SID. Da zum Zeitpunkt t = 240 ms wieder zu übermittelnde Sprachdaten vorliegen, wird zum Zeitpunkt t = 240 ms - analog zum Verfahren nach dem Stand der Technik - ein Nutzdaten-Frame VD übermittelt.

Durch die Übermittlung von Füll-Frames SID mit einer Mindestübertragungsrate, d.h. in konstanten Zeitabständen, kann anhand des erfindungsgemäßen Verfahrens unterschieden werden, ob eine Verbindung unterbrochen ist, oder ob zum aktuellen Zeitpunkt nur keine zu übermittelnden Sprachdaten vorliegen, d.h. eine Gesprächspause vorliegt. Dies ist mit dem Verfahren nach dem Stand der Technik nicht möglich.

Erfindungsgemäß wird durch das Auswertemodul AM zu jedem Berichtzeitpunkt die Anzahl expNumFrames der seit dem letzten Berichtzeitpunkt an der Sende/Empfangseinheit SE-B erwarteten Daten-Frames, die Anzahl arrNumFrames der seit dem letzten Berichtzeitpunkt an der Sende/Empfangseinheit SE-B empfangenen Daten-Frames und die Anzahl lostNumFrames der seit dem letzten Berichtzeitpunkt verlorengegangenen Daten-Frames ermittelt.

Die Anzahl expNumFrames der seit dem letzten Berichtzeitpunkt erwarteten Daten-Frames wird dabei wie folgt berechnet:

$$\exp NumFrames = \frac{t_{Berichtzeitpunkt} - t_{letzter\ Berichtzeitpunkt}}{\Delta t}.$$

Die Anzahl arrNumFrames der seit dem letzten Berichtzeitpunkt an der Sende/Empfangseinheit SE-B empfangenen Daten-Frames ergibt sich durch die Addition der Anzahl der empfangenen Füll-Frames SID multipliziert mit dem Faktor X (beim vorlie genden Ausführungsbeispiel mit dem Faktor X = 3) und der Anzahl der empfangenen Nutzdaten-Frames VP:

$$arrNumFrames = \sum VP + X \cdot \sum SID \; .$$

Die Anzahl lostNumPak der seit dem letzten Berichtzeitpunkt verlorengegangenen Daten-Frames wird wie folgt berechnet:

$$lostNumFrames = \exp NumFrames - arrNumFrames \; .$$

Wie bereits weiter oben ausgeführt, ist die "Voice Activity Detection" derart definiert, dass eine Sendeeinheit dann einen weiteren Füll-Frame SID aussendet, wenn sich die Umgebungsgeräusche über einen einstellbaren Grenzwert hinaus verändern. Dies kann zu dem Effekt führen, dass Füll-Frames SID in einem Zeitabstand gesendet werden, der kleiner ist als $\Delta T = 90$ ms. In derartigen Fallen würde sich für die Anzahl lostNumFrames der seit dem letzten Berichtzeitpunkt verlorengegangenen Daten-Frames beim erfindungsgemäßen Verfahren ein negativer Wert ergeben. In derartigen Fällen wird die Anzahl lostNumFrames der seit dem letzten Berichtzeitpunkt verlorengegangenen Daten-Frames auf den Wert lostNumFrames = 0 gesetzt, d.h. es sind keine Datenpakete verlorengegangen.

Wie bereits in der Beschreibungseinleitung ausgeführt, wird als Messgröße für die Übertragungsqualität in einem IP-orientierten Netzwerk die Anzahl lostNumFrames der bei einer Datenübertragung verlorengegangenen Daten-Frames im Verhältnis zur Anzahl expNumFrames der am Empfänger erwarteten Daten-Frames herangezogen.

Dieses Verhältnis fracLost wird wie folgt berechnet:

$$frakLost = \frac{lostNumFrames \cdot 256}{\exp NumFrames} \; .$$

Zur besseren Darstellbarkeit wird die Anzahl lostNumFrames der seit dem letzten Berichtzeitpunkt verlorengegangenen Daten-Frames mit 256 multipliziert. Somit bedeutet ein Wert fracLost = 0, dass keine Daten-Frames verlorengegangen sind. Ein Wert fracLost = 256 bedeutet, dass alle Daten-Frames verlorengegangen sind. Ergibt sich zu i Berichtzeitpunkten - beispielsweise mit i = 2, 3, 4, 5, usw. - hintereinander ein Wert fracLost = 256, so bedeutet dies, dass die Verbindung zwischen dem ersten und dem zweiten Endgerät PC-A, PC-B unterbrochen ist.

Des weiteren besteht die Möglichkeit für das Verhältnis fracLost einen Schwellwert - der zwischen 0 und 256 liegt - zu definieren, bei dessen Überschreiten die Verbindung als schlecht klassifiziert wird und geeignete Maßnahmen ergriffen werden müssen.

Fig. 3 zeigt nun ein Strukturbild zum Vergleich einer Ermittlung der Übertragungsqualität gemäß dem Stand der Technik nach dem RTCP-Standard und gemäß dem erfindungsgemäßen Verfahren. Zur vereinfachten Darstellung wird dabei von einem Spezialfall ausgegangen, bei dem in einem Datenpaket ein Daten-Frame übermittelt wird. In Fällen, in denen in einem Datenpaket mehrere Daten-Frames übertragen werden, wäre das Verfahren entsprechend anzupassen.

Hierbei werden an der Sende/Empfangseinheit SE-B zu den Zeitpunkten t = 30 ms, t = 60 ms, t = 90 ms, t = 120 ms, t = 210 ms und t = 240 ms Nutzdaten-Pakete VP empfangen. Die empfangenen Nutzdaten-Pakete VP weisen dabei die Paketnummern 1, 2, 3, 4, 7 und 8 auf. Die Nutzdaten-Pakete VP mit den Paketnummern 5 und 6 sind bei der Übertragung über das IP-orientierte Netzwerk IP-N verlorengegangen bzw. die Nutzdaten-Pakete sind bis zum Zeitpunkt t = 270 noch nicht an der Sende/Empfangseinheit SE-B angekommen.

Beim vorliegenden Ausführungsbeispiel erfolgt eine Ermittlung der Übertragungsqualität QoS (Quality of Service) alle 60 ms, d.h. dass bei einer störungsfreien Datenübertragung zwischen 2 Berichtzeitpunkten 2 Nutzdaten-Pakete VP an der Sende/Empfangseinheit SE-B empfangen werden. Für die Berichtzeitpunkte t = 60 ms und t = 120 ms ergeben sich bei beim Verfahren nach dem RTCP-Standard und bei dem erfindungsgemäßen Verfahren keine Unterschiede bei der Ermittlung der Übertragungsqualität QoS.

Beim Berichtzeitpunkt t = 180 ms wird gemäß dem erfindungsgemäßen Verfahren erkannt, dass zwischen den Berichtzeitpunkten, d.h. zwischen t = 120 ms und t = 180 ms, keine Datenpakete und damit auch keine Daten-Frames an der Sende/Empfangseinheit SE-B empfangen wurden. Somit ergibt sich für die Anzahl lostNumFrames der seit dem letzten Berichtzeitpunkt t = 120 ms verlorengegangenen Daten-Frames der Wert lostNumFrames = 2 und für das Verhältnis fracLost der Wert fracLost = 256. Somit ergibt sich eine Übertragungsqualität von QoS = 0.

Beim Verfahren nach dem RTCP-Standard wird wie bereits in der Beschreibungseinleitung beschreiben nur die Paketnummer des zuletzt empfangenen Datenpakets berücksichtigt. Da zum Berichtzeitpunkt t = 180 ms alle Nutzdaten-Pakete VP bis zur Paketnummer 4 an der Sende/Empfangseinheit SE-B empfangen wurden, ergibt sich für die Übertragungsqualität QoS ein Wert von QoS = 1.

Beim Berichtzeitpunkt t = 240 ms wird gemäß dem erfindungsgemäßen Verfahren ermittelt, dass zwischen den Berichtzeitpunkten, d.h. zwischen t = 180 ms und t = 240 ms, 2 Datenpakete an der Sende/Empfangseinheit SE-B empfangen wurden. Somit ergibt sich für die Anzahl lostNumFrames der seit dem letzten Berichtzeitpunkt t = 180 ms verlorengegangenen Daten-Frames der Wert lostNumFrames = 0 und für das Verhältnis fracLost der Wert fracLost = 0. Folglich ergibt sich eine Übertragungsqualität von QoS = 1.

Beim Verfahren nach dem RTCP-Standard wird ermittelt, dass zum Berichtzeitpunkt t = 240 ms das Nutzdaten-Paket VP mit der Paketnummer 8 an der Sende/Empfangseinheit SE-B empfangen wurde. Gleichzeitig wird erkannt, dass die Nutzdaten-Pakete VP mit den Paketnummern 5 und 6 fehlen. Somit ergibt sich für die Übertragungsqualität QoS ein Wert von QoS < 1.

Das erfindungsgemäße Verfahren hat gegenüber dem Verfahren nach dem RTCP-Standard den Vorteil, dass der Zeitpunkt zu dem eine Störung der Datenübertragung über das IP-orientierte Netzwerk IP-N eintritt exakt ermittelt werden kann.

**Patentansprüche**

1. Verfahren für eine Analyse der Übertragungsqualität in einem paket-orientierten Netzwerk (IP-N), wobei an das paket-orientierte Netzwerk (IP-N) zumindest ein erstes und ein zweites Endgerät (PC-A, PC-B) angeschlossen sind, bei dem vom ersten zum zweiten Endgerät (PC-A, PC-B) echtzeit-kritische Daten über Nutzdaten-Frames (VP) übertragen werden,
wobei

   - in Fällen, in denen aktuell keine echtzeit-kritischen Daten zur Übertragung vorliegen, diese Tatsache signalisierende Füll-Frames (SID) mit einer Mindestübertragungsrate vom ersten zum zweiten Endgerät (PC-A, PC-B) übertragen werden, und
   - für die Ermittlung der Übertragungsqualität die Anzahl innerhalb einer Zeitspanne am zweiten Endgerät (PC-B) empfangenen Nutzdaten-Frames (VP) und Füll-Frames (SID) ermittelt wird.

2. Verfahren nach Patentanspruch 1,
wobei die Mindestübertragungsrate derart eingestellt wird, dass die Zeit ($\Delta T$) zwischen der Übertragung zweier Füll-Frames (SID) ein Vielfaches X der Nutzdaten-Frame-Dauer ($\Delta t$) ist.

3. Verfahren nach Patentanspruch 2, wobei
das Vielfache X variabel einstellbar ist.

4. Verfahren nach Patentanspruch 2 oder 3,
wobei
das Vielfache X dem zweiten Endgerät (PC-B) signalisiert wird.

5. Verfahren nach einem der Patentansprüche 2 bis 4,
wobei
für die Ermittlung der Anzahl der am zweiten Endgerät (PC-B) empfangenen Daten-Frames die Anzahl der empfangenen Füll-Frames (SID) mit dem Faktor X gewichtet wird.

6. Verfahren nach Patentanspruch 5,
wobei
die Anzahl der am zweiten Endgerät (PC-B) empfangenen Daten-Frames berechnet wird durch die Anzahl der innerhalb der Zeitspanne empfangenen Füll-Frames (SID) multipliziert mit dem Faktor X plus die Anzahl der innerhalb der Zeitspanne empfangenen Nutzdaten-Frames (VP).

**7.** Verfahren nach einem der Patentansprüche 2 bis 6,
wobei
ein Wert für die Anzahl der innerhalb der Zeitspanne am zweiten Endgerät (PC-B) erwarteten Daten-Frames berechnet wird durch die Zeitspanne geteilt durch die Nutzdaten-Frame-Dauer ($\Delta t$).

**8.** Verfahren nach Patentansprüche 6 und 7,
wobei
als Wert für die Übertragungsqualität das Verhältnis aus der Anzahl der innerhalb der Zeitspanne verlorengegangenen Daten-Frames und der Anzahl der innerhalb der Zeitspanne am zweiten Endgerät (PC-B) erwarteten Daten-Frames herangezogen wird, wobei die Anzahl der innerhalb der Zeitspanne verlorengegangenen Daten-Frames ermittelt wird durch die Anzahl der innerhalb der Zeitspanne am zweiten Endgerät (PC-B) erwarteten Daten-Frames minus der Anzahl der am zweiten Endgerät (PC-B) empfangenen Daten-Frames.

**9.** Verfahren nach einem der Patentansprüche 2 bis 8,
wobei
die Nutzdaten-Frame-Dauer ($\Delta t$) bei unterschiedlichen in den Endgeräten (PC-A, PC-B) angeordneten Sende/Empfangseinheiten (SE-A, SE-B) unterschiedlich ist.

**Claims**

**1.** Method for analysis of the transmission quality in a packet-switched network (IP-N), wherein at least one first and one second terminal (PC-A, PC-B) are connected to the packet-switched network (IP-N), wherein real time critical data are transmitted from the first to the second terminal (PC-A, PC-B) via useful data frames (VP), where

- in cases in which currently no real time critical data are present for transmission, full frames (SID) signalling this fact are transmitted with a minimum transmission rate from the first to the second terminal (PC-A, PC-B), and
- to determine the transmission quality, the number of useful data frames (VP) and full frames (SID) received within a time period at the second terminal (PC-B) is determined.

**2.** Method according to claim 1, wherein the minimum transmission rate is set such that the time ($\Delta T$) between transmissions of two full frames (SID) is a multiple X of the useful frame duration ($\Delta T$).

**3.** Method according to claim 2, wherein the multiple X can be set variably.

**4.** Method according to claim 2 or 3, wherein the multiple X is signalled to the second terminal (PC-B).

**5.** Method according to any of claims 2 to 4, wherein to determine the number of data frames received at the second terminal (PC-B), the number of full frames (SID) received is weighted with the factor X.

**6.** Method according to claim 5, wherein the number of data frames received at the second terminal (PC-B) is calculated by the number of full frames (SID) received within the time period multiplied by the factor X plus the number of useful data frames (VP) received in the time period.

**7.** Method according to any of claims 2 to 6, wherein a value for the number of data frames expected within the time period at the second terminal (PC-B) is calculated by the time period divided by the useful frame duration ($\Delta T$).

**8.** Method according to claim 6 and 7, wherein as a value for the transmission quality, the ratio is used of the number of data frames lost within the time period to the number of data frames expected within the time period at the second terminal (PC-B), wherein the number of data frames lost within the time period is determined by the number of data frames expected within the time period at the second terminal (PC-B) minus the number of data frames received at the second terminal (PC-B).

**9.** Method according to any of claims 2 to 8, wherein the useful frame duration ($\Delta T$) is different at different transmitter/ receiver units (SE-A, SE-B) arranged in the terminals (PC-A, PC-B).

**Revendications**

1. Procédé pour une analyse de la qualité de transmission dans un réseau en mode commutation de paquets (IP-N), au moins un premier et un deuxième terminal (PC-A, PC-B) étant raccordés au réseau en mode commutation de paquets (IP-N), avec lequel des données critiques en temps réel sont transmises du premier au deuxième terminal (PC-A, PC-B) par le biais de trames de données utiles (VP), sachant que

   - dans des cas dans lesquels il n'y a pas actuellement de données critiques en temps réel à transmettre, des trames complètes (SID) signalisant ce fait sont transmises avec un débit de transmission minimal du premier au deuxième terminal (PC-A, PC-B), et
   - pour la détermination de la qualité de transmission, on détermine le nombre de trames de données utiles (VP) et de trames complètes (SID) reçues par le deuxième terminal (PC-B) au cours d'un intervalle de temps.

2. Procédé selon la revendication 1,
   dans lequel le débit de transmission minimal est réglé de manière telle que le temps ($\Delta T$) entre la transmission de deux trames complètes (SID) est un multiple X de la durée ($\Delta t$) d'une trame de données utiles.

3. Procédé selon la revendication 2,
   dans lequel le multiple X peut être réglé de manière variable.

4. Procédé selon la revendication 2 ou 3, dans lequel le multiple X est signalé au deuxième terminal (PC-B).

5. Procédé selon une des revendications 2 à 4, dans lequel, pour la détermination du nombre de trames de données reçues par le deuxième terminal (PC-B), on pondère le nombre de trames complètes (SID) reçues avec le facteur X.

6. Procédé selon la revendication 5, dans lequel le nombre des trames de données reçues par le deuxième terminal (PC-B) est calculé en multipliant le nombre des trames complètes (SID) reçues pendant l'intervalle de temps par le facteur X, puis en additionnant le nombre des trames de données utiles (VP) reçues pendant l'intervalle de temps.

7. Procédé selon l'une des revendications 2 à 6, dans lequel une valeur est calculée pour le nombre des trames de données attendues par le deuxième terminal (PC_B) pendant l'intervalle de temps en divisant l'intervalle de temps par la durée d'une trame de données utiles ($\Delta t$).

8. Procédé selon les revendications 6 et 7, dans lequel la valeur pour la qualité de transmission est le rapport du nombre de trames de données perdues pendant l'intervalle de temps sur le nombre de trames de données attendues par le deuxième terminal (PC-B) pendant l'intervalle de temps, le nombre de trames de données perdues pendant l'intervalle de temps étant déterminé par le nombre de trames de données attendues par le deuxième terminal (PC-B) pendant l'intervalle de temps moins le nombre de trames de données reçues par le deuxième terminal (PC-B).

9. Procédé selon une des revendications 2 à 8, dans lequel la durée d'une trame de données utiles ($\Delta t$) est différente selon les différentes unités d'émission/réception (SE-A, SE-B) disposées dans les terminaux (PC-A, PC-B).

FIG 1

## FIG 2A    Stand der Technik

| VP | | VP | | SID | | | | | | | | VP | |

0    30 ms    60 ms    90 ms    120 ms    150 ms    180 ms    210 ms    240 ms    270 ms    t

Δt

## FIG 2B

ΔT

| VP | | VP | | SID | | | | | | SID | | | | VP | |

0    30 ms    60 ms    90 ms    120 ms    150 ms    180 ms    210 ms    240 ms    270 ms    t

Δt

EP 1 432 174 B1

# FIG 3

RTCP-Verfahren        erfindungsgemäßes Verfahren

**IN DER BESCHREIBUNG AUFGEFÜHRTE DOKUMENTE**

**In der Beschreibung aufgeführte Patentdokumente**

- DE 10210651
- WO 9727686 A1
- WO 0031996 A2